# EUROPÄISCHE PATENTSCHRIFT

(11) **EP 0 493 656 B1**
(45) Veröffentlichungstag und Bekanntmachung des Hinweises auf die Patenterteilung: **05.04.1995**
(21) Anmeldenummer: 91117441.5
(22) Anmeldetag: 12.10.1991
(51) Int. Cl.: H01H 9/16, B64C 13/00, H03K 17/968

(54) **Schaltstellungssensor**
Switch position sensor
Capteur de position de commutation

(30) Priorität: 31.12.1990 DE 4042302
(43) Veröffentlichungstag der Anmeldung: 08.07.1992
(73) Patentinhaber: Bodenseewerk Gerätetechnik GmbH, 88662 Überlingen (DE)
(72) Erfinder: Boos, Franz Karl, W-7760 Radolfzell (DE)
(74) Vertreter: Weisse, Jürgen, Dipl.-Phys. Patentanwalt

(56) Entgegenhaltungen:
- EP-A- 0 162 376
- US-A- 3 475 676

## Beschreibung

Die Erfindung betrifft einen Schaltstellungssensor mit optischem Abgriff zum Abgreifen der Stellung eines in diskrete Stellungen schaltbaren Steuergliedes.

### Zugrundeliegender Stand der Technik

Durch die DE-A-29 19 431 ist eine Steuereinrichtung zum Einstellen von Luftfahrzeugsteuerflächen mit einem manuell verstellbaren Positionsgeber bekannt. Der Positionsgeber besteht aus einer durch ein Steuerglied in Form eines Stellhebels verstellbaren Scheibe mit Lichtmarken. Die Lichtmarken beeinflussen bei entsprechender Verstellung der Scheibe zugeordnete, ortsfeste Detektoren in Form von Lichtsensoren. Die Detektoren steuern Codierstufen an. Über diese Codierstufen werden in bestimmten Schaltstellungen des Stellhebels Steuerbefehle für Stellungen der Flugzeugsteuerflächen ausgelöst.

Durch die DE-A-38 22 007 ist ein digitaler Stellungsgeber bekannt, bei welchem ein Steuerglied in Form eines Steuerhebels kardanisch in zwei Richtungen verschwenkbar gelagert ist. Mit den Kardanrahmen sind Codierscheiben verbunden, die opto-elektronisch abgetastet werden. Dabei sind zur Übertragung von optischen Signalen von einer Lichtquelle zu den Codierscheiben und von den Codierscheiben zu photoelektrischen Detektoren Lichtwellenleiter vorgesehen.

Durch die DE-A-30 32 918 ist eine Anordnung zur Übertragung von Steuersignalen auf Steuerflächen von Luftfahrzeugen bekannt, bei welcher die Signale optisch über ein Netzwerk von mehrfach vermaschten Lichtwellenleitern übertragen werden. Steuerbefehle werden als digitale, adressierte Lichtsignale übertragen. Das Netzwerk von Lichtwellenleitern wirkt dabei als "Datenbus".

Die DE-A-30 32 918 beschreibt dabei auch eine optoelektronische Stellungsabtastung einer Steuersäule, die als Signalgeber wirkt. Dabei ist ein Segment mit Lichtsender-Dioden mit der Steuersäule gegenüber einer bogenförmigen Anordnung von Lichtempfänger-Dioden verschwenkbar. Die Lichtsender-Dioden werden über eine Schaltmatrix angesteuert, die ein bestimmtes elektrisches Impulsmuster liefert. Dadurch senden die Dioden bestimmte digitale Lichtimpulse aus. Die Lichtempfänger-Dioden nehmen ein Lichtsignal auf, das der jeweiligen Stellung der Steuersäule entspricht. Dieses Lichtsignal wird durch eine Codiermatrix, auf welche die Lichtempfänger-Dioden aufgeschaltet sind, in ein digitales Lichtsignal umgewandelt. Dieses Lichtsignal wird durch einen Mischer laufend abgefragt.

### Offenbarung der Erfindung

Der Erfindung liegt die Aufgabe zugrunde, einen Schaltstellungssensor der eingangs definierten Art (siehe z.B. DE-A 30 32 918) einfach und zuverlässig auszuführen.

Erfindungsgemäß wird diese Aufgabe gelöst durch
(a) eine Anordnung von optischen Sendern, die von Frequenzgeneratoren mit unterschiedlichen Frequenzen gespeist werden,
(b) lichtempfangende Mittel,
(c) Mittel zur Erzeugung einer Relativbewegung zwischen den lichtempfangenden Mitteln und den optischen Sendern in Abhängigkeit von der Schaltbewegung des Steuergliedes derart, daß bei jeder der diskreten Stellungen des Steuergliedes die lichtempfangenden Mittel von genau einem der optischen Sender belichtet sind.

Es ergeben sich dann an den lichtempfangenden Mitteln Lichtsignale, deren Frequenz von der Schaltstellung des Steuergliedes abhängt.

Die Erfindung kann in der Weise verwirklicht werden, daß die lichtempfangenden Mittel von einem Lichtübertragungsglied gebildet sind, welches das von dem optischen Sender empfangene Licht auf einen Lichtwellenleiter weiterleitet. Der Lichtwellenleiter kann mit optisch-elektronischen Wandlermitteln verbunden sein, durch welche die empfangenen Lichtimpulse in elektrische Impulse umsetzbar sind, die über abgeschirmte elektrische Leitungsmittel ein signalverarbeitendes System beaufschlagen. Der Lichtwellenleiter kann aber auch zu einem signalverarbeitenden System geführt sein, das optischelektronische Wandlermittel enthält, durch welche die übertragenen Lichtimpulse in elektrische Impulse umsetzbar sind. Dabei können die Signalverarbeitungsmittel einen Frequenz-Spannungs-Wandler oder einen Frequenz-Digital-Wandleraufweisen, der von den elektrischen Impulsen beaufschlagt ist.

Zwei Ausführungsbeispiele der Erfindung sind nachstehend unter Bezugnahme auf die zugehörigen Zeichnungen näher erläutert.

### Kurze Beschreibung der Zeichnungen

- Fig. 1: ist eine schematische Darstellung eines Schaltstellungssensors.
- Fig.2: ist eine schematische Darstellung und zeigt eine erste Art der Signalübertragung.
- Fig.3: ist eine schematische Darstellung und zeigt eine zweite Art der Signalübertragung.

### Bevorzugte Ausführungen der Erfindung

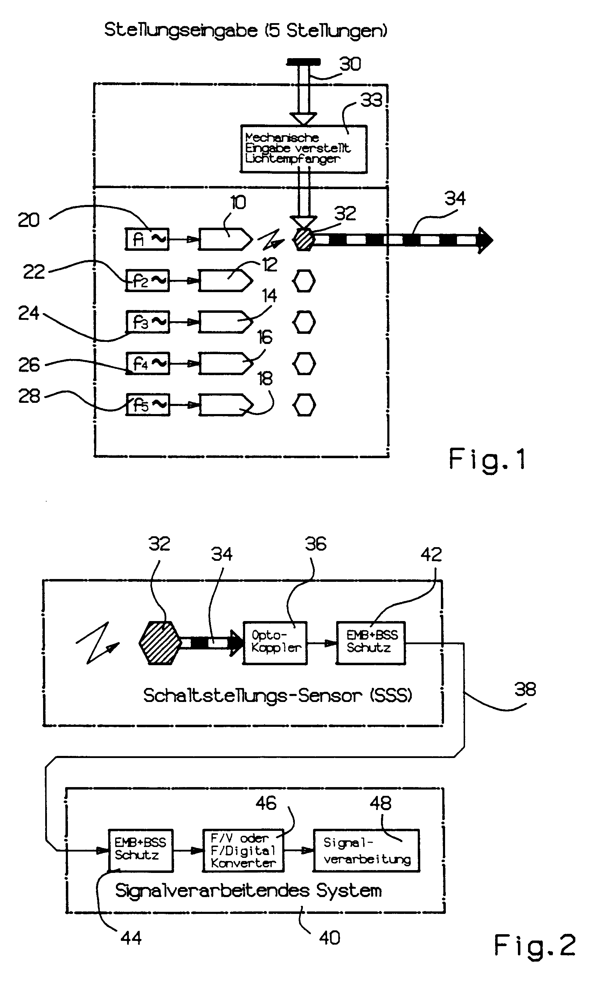

Der Schaltstellungssensor enthält eine Reihe von n optischen Sendern, im dargestellten Ausführungsbeispiel fünf Sender 10, 12, 14, 16, 18. Jeder der Sender ist von einem Frequenzgenerator 20, 22, 24, 26 bzw. 28 angesteuert. Die Frequenzen der fünf Frequenzgeneratoren sind unterschiedlich. Dementsprechend liefern die optischen Sender 10, 12, 14, 16 und 18 Folgen von Lichtimpulsen mit unterschiedlichen Frequenzen. Durch ein in n Schaltstellungen, im dargestellten Ausführungsbeispiel in fünf Schaltstellungen verstellbares Steuerglied 30, z.B. einen in fünf Stellungen einrastbaren, verschwenkbaren Stellhebel, sind lichtempfangende Mittel 32 über mechanische Verbindungsglieder 33 in fünf Stellungen verstellbar. In jeder der Stellungen werden die lichtempfangenden Mittel 32 von genau einem der optischen Sender 10, 12, 14, 16 oder 18 beleuchtet. In Fig. 1 sind die lichtempfangenden Mittel in ihrer ersten Stellung dargestellt. Die übrigen vier Stellungen sind gestrichelt angedeutet. Die lichtempfangenden Mittel sind Lichtübertragungsmittel. Sie leiten das von dem optischen Sender darauffallende Licht auf einen Lichtwellenleiter 34. Die Folge von Lichtimpulsen ist in Fig. 1 durch die Schwarzweißmarkierung angedeutet.

Bei der Ausführung nach Fig.2 ist der Lichtwellenleiter 34 zu optisch-elektronischen Wandlermitteln 36 geführt. Die optisch-elektronischen Wandlermittel setzen die Lichtimpulse in elektrische Impulse der gleichen, für die Schaltstellung charakteristischen Frequenz um. Diese elektrischen Impulse werden über eine elektrische Leitung 38 zu einem signalverarbeitenden System 40 übertragen. Durch die Blöcke 42 und 44 sind Schutzmaßnahmen gegen elektromagnetische Beeinflussung und Blitzschlagstörungen symbolisiert. In dem signalverarbeitenden System 40 ist ein Frequenz-Spannungs-Wandler oder ein Frequenz-Digital-Wandler 46 vorgesehen. Der Ausgang des Frequenz-Spannungs-Wandlers oder Frequenz-Digital-Wandlers (je nach der Art der Signalverarbeitung) beaufschlagt signalverarbeitende Mittel 48. Die signalverarbeitenden Mittel 48 steuern (nicht dargestellte) Stellglieder an.

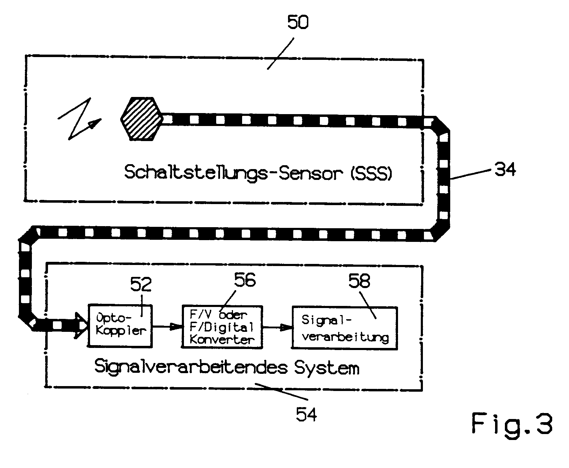

Bei der Ausführung nach Fig.3 erfolgt die Übertragung der Signale vom Schaltstellungssensor 50 zu dem signalverarbeitenden System auf optischem Wege mittels des Lichtwellenleiters 34. Optisch-elektronische Wandlermittel 52 sind hier in dem signalverarbeitenden System 54 angeordnet. Die optisch-elektronischen Wandlermittel liefern elektrische Impulse mit der für die Schaltstellung charakteristischen Frequenz. Diese Impulse sind wieder auf einen Frequenz-Spannungs-Wandler oder einen Frequenz-Digital-Wandler 56 aufgeschaltet. Der Ausgang des Frequenz-Spannungs- Wandlers bzw. Frequenz-Digital-Wandlers 56 beaufschlagt signalverarbeitende Mittel 58.

## Patentansprüche

1. Schaltstellungssensor mit optischem Abgriff zum Abgreifen der Stellung eines in diskrete Stellungen schaltbaren Steuergliedes,
**gekennzeichnet durch**
(a) eine Anordnung von optischen Sendern (10,12,14,16, 18), die von Frequenzgeneratoren (20,22,24,26,28) mit unterschiedlichen Frequenzen gespeist werden,
(b) lichtempfangende Mittel (32),
(c) Mittel zur Erzeugung einer Relativbewegung zwischen den lichtempfangenden Mitteln (32) und den optischen Sendern (10,12,14,16,18) in Abhängigkeit von der Schaltbewegung des Steuergliedes (30) derart, daß bei jeder der diskreten Stellungen des Steuergliedes (30) die lichtempfangenden Mittel (32) von genau einem der optischen Sender (10,12,14,16,18) belichtet sind.

2. Schaltstellungssensor nach Anspruch 1, **dadurch gekennzeichnet, daß** die lichtempfangenden Mittel (32) von einem Lichtübertragungsglied gebildet sind, welches das von dem optischen Sender (10,12,14,16,18) empfangene Licht auf einen Lichtwellenleiter (34) weiterleitet.

3. Schaltstellungssensor nach Anspruch 2, **dadurch gekennzeichnet, daß** der Lichtwellenleiter (34) mit optisch-elektronischen Wandlermitteln (36) verbunden ist, durch welche die empfangenen Lichtimpulse in elektrische Impulse umsetzbar sind, die über abgeschirmte elektrische Leitungsmittel (38) ein signalverarbeitendes System beaufschlagen.

4. Schaltstellungssensor nach Anspruch 2, **dadurch gekennzeichnet, daß** der Lichtwellenleiter (34) zu einem signalverarbeitenden System (54) geführt ist, das optisch-elektronische Wandlermittel (52) enthält, durch welche die übertragenen Lichtimpulse in elektrische Impulse umsetzbar sind.

5. Schaltstellungssensor nach Anspruch 2 oder 3, **dadurch gekennzeichnet, daß** die Signalverarbeitungsmittel einen Frequenz-Spannungs-Wandler (46;56) aufweisen, der von den elektrischen Impulsen beaufschlagt ist.

6. Schaltstellungssensor nach Anspruch 2 oder 3, **dadurch gekennzeichnet, daß** die Signalverarbeitungsmittel einen Frequenz-Digital-Wandler (46;56) aufweisen, der von den elektrischen Impulsen beaufschlagt ist.

## Claims

1. Index position sensor including an optical pick-up for picking up the position of a control member which can be indexed between discrete positions, said sensor,
**characterized by**
(a) an arrangement of optical transmitters (10,12,14, 16,18) which are supplied with different frequencies by respective frequency generators (20, 22,24,26,28),
(b) light receiving means (32),
(c) means for generating relative movement between the light receiving means (32) and the optical transmitters (10,12,14,16,18) as a function of the indexing movement of the control member (30) such that the light receiving means (32) are illuminated by exactly one of said optical transmitters (10,12, 14,16,18) in each one of said discrete positions of said control member (30).

2. Index position sensor according to claim 1, **characterized in that** the light receiving means (32) are formed by a light transmitting member which passes light received from the optical transmitter (10,12,14, 16,18) to an optical wave guide (34).

3. Index position sensor according to claim 2, **characterized in that** the optical wave guide (34) is connected to opto-electronic transducer means (36) by means of which the received light pulses are convertable into electrical pulses which are applied to a signal processing system through shielded electrical conductor means (38).

4. Index position sensor according to claim 2, **characterized in that** the optical wave guide (34) is passed to a signal processing system (54) including opto-electronic transducer means (52) by means of which the transmitted light pulses are convertable into electrical pulses.

5. Index position sensor according to claim 2 or 3, **characterized in that** the signal processing means comprise a frequency-voltage converter (46;56) to which the electrical pulses are applied.

6. Index position sensor according to claim 2 or 3, **characterized in that** the signal processing means comprise a digital frequency converter (46;56) to which the electrical pulses are applied.

## Revendications

1. Détecteur de cran du combinateur avec prélèvement optique destiné à prélever la position d'un opérateur de commande commutable dans des positions discrètes,
**caractérisé par**
(a) une disposition de détecteurs optiques (10, 12, 14, 16, 18) alimentés par des générateurs de fréquences (20, 22, 24, 26, 28) à fréquences différentes,
(b) des moyens recevant de la lumière (32),
(c) des moyens destinés à engendrer un déplacement relatif entre les moyens recevant de la lumière (32) et les détecteurs optiques (10, 12, 14, 16, 18) en fonction du mouvement de commutation de l'opérateur de commande (30) de sorte que dans chacune des positions discrètes de l'opérateur de commande (30) les moyens recevant de la lumière (32) sont illuminés par exactement l'un des détecteurs optiques (10, 12, 14, 16, 18).

2. Détecteur de cran du combinateur selon la revendication 1, **caractérisé par le fait que** les moyens recevant de la lumière (32) sont formés par un élément de transmission de lumière qui transmet la lumière reçue par le détecteur optique (10, 12, 14, 16, 18) à un guide d'onde lumineuse (34).

3. Détecteur de cran du combinateur selon la revendication 2, **caractérisé par le fait que** le guide d'onde lumineuse (34) est relié à des moyens convertisseurs optoélectroniques (36) susceptibles de convertir les impulsions de lumière reçues en impulsions électriques appliquées par des moyens de conduite électrique protégés (38) à un système de traitement de signal.

4. Détecteur de cran du combinateur selon la revendication 2, **caractérisé par le fait que** le guide d'onde lumineuse (34) est conduit vers un système de traitement de signal (54) comprenant des moyens convertisseurs opto-électroniques (52) susceptibles de convertir les impulsions de lumière reçues en impulsions électriques.

5. Détecteur de cran du combinateur selon la revendication 2 ou 3, **caractérisé par le fait que** les moyens de traitement de signal présentent un convertisseur fréquence-tension (46;56) auquel sont appliquées les impulsions électriques.

6. Détecteur de cran du combinateur selon la revendication 2 ou 3, **caractérisé par le fait que** les moyens de traitement de signal présentent un convertisseur fréquence-digital (46;56) auquel sont appliquées les impulsions électriques.
